# EUROPEAN PATENT SPECIFICATION

(11) **EP 1 754 009 B1**
(45) Date of publication and mention of the grant of the patent: **07.10.2009**
(21) Application number: 05742032.5
(22) Date of filing: 30.05.2005
(51) Int. Cl.: F25J 3/04

(54) **DISTILLATION INSTALLATION**
DESTILLIERANLAGE
INSTALLATION DE DISTILLATION

(30) Priority: 04.06.2004 FR 0451109
(43) Date of publication of application: 21.02.2007
(73) Proprietor: L'AIR LIQUIDE, Société Anonyme pour l'Etude et l'Exploitation des Procédés Georges Claude, 75007 Paris (FR)
(72) Inventor: WERLEN, Etienne, F-94100 Maisons-Alfort (FR); LECLERCQ, François, F-28230 Epernon (FR); LEBAIN, Gilles, F-94320 Thiais (FR)
(74) Representative: Mercey, Fiona Susan
(86) International application number: PCT/IB2005/001512
(87) International publication number: WO 2005/119148

(56) References cited:
- US-A- 5 045 403

## Description

The present invention relates to a distillation installation, comprising at least one cross-corrugated mass/heat exchange packing module provided with at least two strips made of sheet material for a cross-corrugated packing module, of the type comprising corrugations that form alternately first main peaks directed along a first direction and second main peaks directed along the opposite direction, the corrugations defining channels, each channel lying between two first or second adjacent main peaks, the channels having a general orientation that is inclined to a general flow direction of a liquid through the module, the strip furthermore comprising two strip edges that lie approximately perpendicular to the general flow direction and at least first and second adjacent rows of inverted portions, these rows lying approximately parallel to the strip edges and respectively comprising first and second inverted potions that lie in the cross section of a channel, the strip defining two lengths measured along the general flow direction, namely:
- a peak length between the said first and second rows, the said length being measured between the peak points adjacent to the inverted portions of the first and second rows; and
- an inverted portion length measured between the two points of a first or a second inverted portion, the said points being adjacent to the associated main peak.

The term "packing" is understood to mean a device intended for mixing a phase and/or for bringing several phases flowing cocurrently or countercurrently into contact with one another. A heat and/or mass exchange and/or a chemical reaction may in particular take place in the packing. One particular application of the invention lies in the columns for separating gas mixtures, especially air distillation columns.

Mentioned in the prior art are air distillation installations comprising cross-corrugated packing modules, which are also called "packs". The modules comprise corrugated metal sheets placed vertically, the corrugations of which sheets are oblique with respect to a general fluid flow direction in the installation and are inclined alternately, generally crossed at 90°, from one sheet to another.

The packing modules are slipped into the distillation column so that the sheets of one module are angularly offset with respect to the sheets of an adjacent module about the axis of the column, generally by 90° from one module to another.

To improve the exchange between a liquid and a gas which flow through the packing module, it has been proposed in the prior art to have openings that are made in the corrugated sheets. These openings lead to a change in the flow of the gas from one side of the metal sheet of the packing sheet to the other and improve the exchange with the liquid.

Such a strip is known, for example from document EP-A-1 029 588, and comprises corrugations forming peaks and valleys joined by corrugation legs defining channels. This strip includes inverted portions, also called "serrations" that extend along each channel and form the openings.

The inverted portions interrupt the peaks along a length equal to the length of the inverted portion. When two strips are applied against each other, the peak lines of the two strips cross each other at points of contact. At the locations where two inverted portions cross each other, there exist open spaces between the strips that allow local deformation of the two strips.

This deformation impairs the heat and/or mass exchange performance of the installation and results in a substantial head loss.

The object of the present invention is to alleviate the above drawbacks and to propose a packing strip that exhibits improved heat and/or mass exchange performance.

For this purpose, the subject of the invention is an installation according to Claim 1.

According to particular embodiments of the invention, the installation according to the invention includes one or more of the following features:
- the ratio of the two lengths between them is greater than 1.2;
- the inverted portion length is less than the peak length;
- the strip defines a peak period, measured between two first or two second adjacent main peaks and along the general flow direction, and in that the sum of the inverted portion length and the peak length is different from the peak period;
- the sum of the inverted portion length and the peak length is less than 0.66 times the peak period;
- each channel comprises a main top peak formed by a second or a first main peak, each inverted portion comprises a first intermediate peak, oriented in the opposite direction to the top main peak, and at least one second intermediate peak oriented in the direction of the top main peak;
- the strip comprises a mid-line lying parallel to the strip edges and at the same distance from them, and, for at least one row of inverted portions that is located on one side of the mid-line, the distance between this row of inverted portions and the mid-line is different from the distance between the mid-line and each row of inverted portions that is located on the other side of the mid-line;
- the inverted portions and the corrugations define openings provided with opening edges, and the opening edges lie at any point approximately along the natural liquid flow line;
- the sum of the inverted portion length and the peak length is different from the peak period divided by n, where n = 1, 2, 3, 4 etc.; and
- the cross-corrugated packing module for a mass/heat exchange column comprises a stack of strips with their corrugation orientations inverted prom one strip to the next, **characterized in that** at least two strips are applied against each other, and one of the strips is turned through 180° relative to the other about a mid-line lying at mid-distance between the strip edges.

A better understanding of the invention will be gained on reading the following description, given solely by way of example and with reference to the appended drawings in which:
- Figure 1 is a schematic view, in longitudinal section, of a mass and/or heat exchange column comprising packing modules according to the invention;
- Figure 2 is a plan view of a packing strip of an installation according to the invention;
- Figures 3A to 3C are sectional views of the packing strip along the line III-III of Figure 2, on a larger scale and indicating different positions of an adjacent strip;
- Figure 4 is a schematic plan view of a combination of two packing strips according to the invention; and
- Figure 5 is a perspective view of a portion of a packing strip according to the invention.

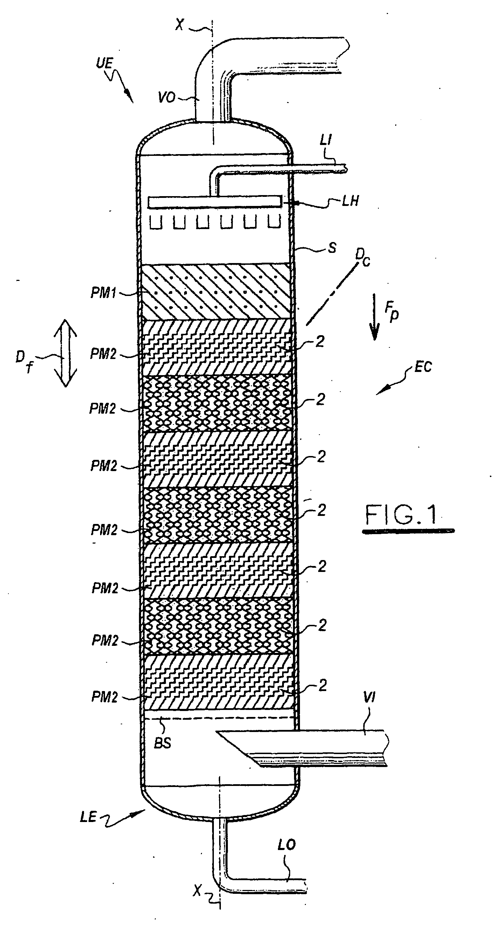

Figure 1 shows a mass and/or heat exchange column EC according to the invention having a vertical general axis X-X. The column EC is for example a cryogenic distillation column, especially an air distillation column. The column EC defines a general fluid flow direction D_{f}, which runs vertically during use.

The column EC comprises, at its upper end UE, a liquid inlet LI merging in a liquid header LH which distributes the liquid over the cross section of the column EC, and a vapour outlet VO. At its lower end LE, it includes a vapour inlet VI and a liquid outlet LO. The column EC furthermore includes a cylindrical shell S.

A packing module PM1, which favours the spreading of the liquid transversely to the X-X axis, is placed in the shell S directly below the header LH. Such a module PM1 is known per se and is, for example, a packing module comprising a cross-corrugated packing with perforations or striations.

A plurality of packing modules PM2 according to the invention is placed in the shell S below the module PM1. A bottom support BS holds the packing modules PM1, PM2 in place.

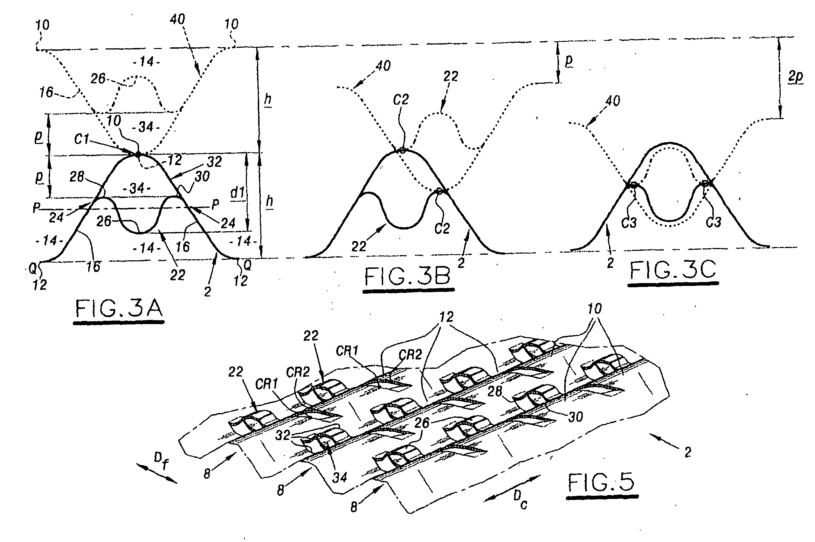

Each packing module PM2 comprises a multitude of corrugated packing strips 2. The strips 2 comprise a mid-plane P (see Figure 3A) lying parallel to the general direction D_{f}. The strips 2 of a module PM2 are placed against one another and in such a way that the planes P lie parallel to one another. The planes P of the packing strips of two adjacent modules PM2 are angularly offset about the X-X axis, preferably by approximately 90°.

The structure and the geometrical proportions of the packing strip 2 will firstly be described, and then a combination of two packing strips 2 and 40 according to the invention and the advantages that stem from the structure of the strip.

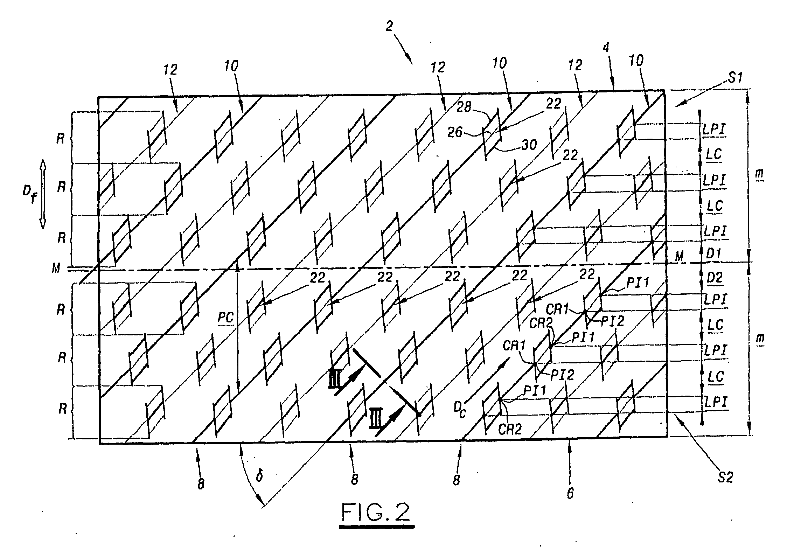

Figure 2 shows a plan view of the packing strip 2 of an installation according to the invention.

The strip 2 has two parallel edges, the upper edge 4 and the lower edge 6, which lie perpendicular to the direction D_{f}. The strip 2 defines a mid-line M-M that lies parallel to the edges 4, 6 and at an equal distance m from them. This line M-M separates the strip 2 into two half-strips S1, S2.

The strip 2 has corrugations 8 that form alternately first main peaks 10, directed along one direction relative to the plane P (see Figure 3A), and second main peaks 12 directed along the opposite direction relative to the plane P. In the "flat" orientation of Figure 3A, the second peaks 12 form valleys.

The corrugations 8 form identical channels 14 that are alternately inverted, each of which runs between two first 10 or two second 12 main edge peaks joined together by a second 12 or a first 10 main peak' that forms a main top peak of the channel 14 in question. The channels 14 have identical cross sections and two adjacent channels 14 open in opposite directions. Two adjacent main peaks 10, 12 are joined together by a channel leg 16 of straight section. The channels 14, and consequently the peaks 10, 12, lie along a channel direction D_{c} that is inclined at an angle δ to the edges 4, 6 (see Figure 2). The angle δ is between 45° and 60°.

The strip 2 furthermore comprises a multitude of inverted portions 22 (serrations) that are arranged in rows R lying parallel to the edges 4, 6. The strip 2 comprises six rows R of inverted portions 22, three of which are placed on each half-strip S1 and S2.

Figure 3A shows one of these inverted portions 22. The inverted portion 22 lies entirely within the cross section of the channel 14. The inverted portion 22 joins the two legs 16 of the channel 14 and is joined to them at two joins 24. It forms a first intermediate peak 26, directed in the opposite direction to the top peak 10 of the channel, and two intermediate peaks a second intermediate peak 28 and a third intermediate peak 30, which are oriented in the direction of the top main peak 10 and lie on either side of the intermediate peak 26.

The developed length of the inverted portion 22 is identical to the developed length of the corrugation 8 between the two joins 24. Thus, the material of the strip 2 is not stretched, or only slightly stretched, during the bending operation.

The radii of curvature of the strip 2 at the locations of the main peaks 10, 12 and of the intermediate peaks 26, 28, 30 are preferably at least 1 mm and in particular at least 2 mm, which makes it easier to form the inverted portion 22 without material rupture.

As shown in Figure 5, each inverted portion 22 and the associated corrugation 8 define edges 32 that form two openings 34. These openings 34 coincide in Figures 3A to 3C. The edges 32 lie at any point approximately along the natural liquid flow line in the state mounted in the column CL. Thus, the packing strip 2 forms few areas that are dry during its use.

Again referring to Figure 3A, it may be seen that the channel 14 has a height h that is measured between the top main peak 10 of the channel and a plane Q defined by the two adjacent edge main peaks 12. The distance dl between the top main peak 10 and the first intermediate peak 26 is less than 0.8 times the height h and is in this case approximately 2/3 of the height h. Thus, the first intermediate peak 26 lies approximately at the location of the mass concentration or the maximum or minimum temperature of a gas flowing in the channel 14. Consequently, the concentration and/or temperature gradient between the gas and the liquid is high, which leads to substantial heat and/or mass exchange.

The inverted portion 22 defines a depth p, which is measured between the peak 10 and a plane defined by the intermediate peaks 28, 30.

Referring to Figure 2, the strip 2 defines peak lengths LC that lie between two adjacent rows R based on the same half-strip S1 or S2 and on the same corrugation 8, and also defines lengths of the inverted portion LPI. Each of these two lengths LC and LPI is measured along the general flow direction D_{f}. All the peak lengths LC and all the inverted portion lengths LPI are identical.

The peak length LC' is measured between the two peak points CR1, CR2 adjacent to the two inverted portions 22 of the respective adjacent rows R in question. The length of the inverted portion LPI is measured between the two points PI1, PI2 of the inverted portion 22 in question adjacent to the associated main peak 10, 12. In Figure 2, the points PI1 and CR2 and the points PI2 and CR1 overlap (see also Figure 5).

According to the invention, the lengths LC and LPI differ from each other. Preferably, the ratio of the two lengths LC and LPI is greater than 1.2, especially greater than 1.5 and in particular greater than 2.0. Furthermore, the peak length LC is greater than 1.2 times the inverted portion length LPI, so that the inverted portion length LPI is less than the peak length LC.

The strip 2 defines a peak period PC, measured between two first 10 or two second 12 adjacent main peaks, along the general flow direction D_{f}. The sum of the inverted portion length LPI.and the peak length LC is different from the peak period PC. Preferably, the sum of the inverted portion length LPI and the peak length LC is less than 0.66 times the peak period PC.

Furthermore, the sum of the inverted portion length LPI and the peak length LC is different from PC/n, where n = 1, 2, 3, 4, etc.

The row R of the half-strip S1 that is closest to the mid-line M-M is placed at a distance D1 from the mid-line M-M, whereas the row R of the half-band S2 that is closest to the mid-line M-M is placed at a distance D2 from the mid-line M-M. The distances D1 and D2 are measured in a similar way to the lengths LC, i.e. between the point of the main peak 10, 12 which is adjacent to the inverted portion 22 of the row R in question and the mid-line M-M, and also along the direction D_{f}.

Thus, the distance between each row R located on one side of the mid-line M-M and the mid-line M-M is different from the distance between the mid-line M-M and each row R located on the other side of the mid-line.

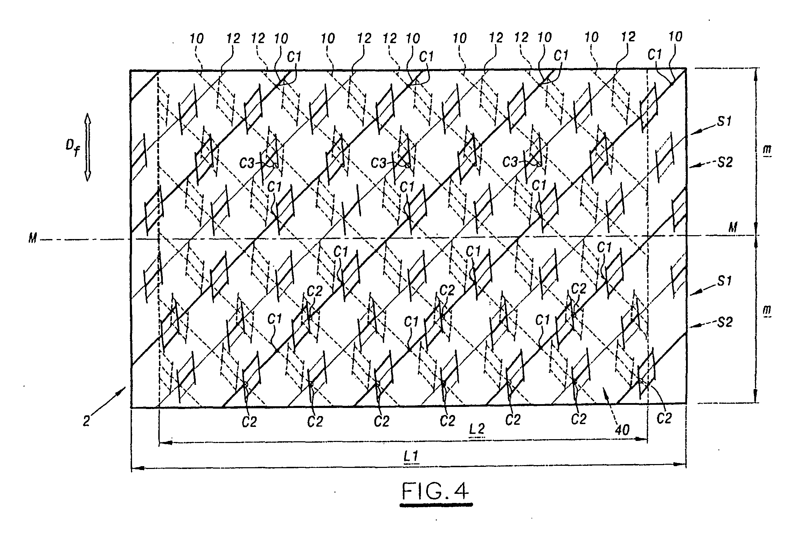

Figure 4 shows schematically a combination of two strips 2 and 40 according to the invention, as they will be placed in the packing module PM2.

The packing module PM2 has a cross section that is not rectangular or square in shape, for example circular. Consequently, the two strips 2, 40 have different lengths L1, L2 measured along the edges 4, 6.

The strip 2, depicted in continuous lines, is the strip 2 of Figure 2. The strip 40, in the representation in Figure 4, is placed in front of the strip 2 and is depicted in broken lines.

The two strips 2, 40 are applied against each other in such a way that the channels 14 of the two strips 2, 40 lie along directions D_{c} that are inverted from one strip to the other. The packing strip 40 is inverted by 180° about the mid-line M-M relative to the packing strip 2, in such a way that the half-strip S1 of the strip 2 is applied against the half-strip S2 of the strip 40, and vice versa.

At the locations where a main peak 10 of the strip 2 crosses a main peak 12 of the strip 40, the two strips 2, 40 define points of contact C1 between them. As shown in Figure 3A, at these locations the two strips 2, 40 cannot overlap. The locations where a main peak 10 crosses an inverted portion 22, the two strips 2, 40 define two points of semi-contact C2. At these locations, C2, the two strips 2, 40 can overlap each other by a distance that is equal to the depth p of the inverted portion (see Figure 3B). At the locations where two inverted portions 22 cross each other, the strips 2, 40 define points of overlap C3. At these locations, the two strips 2, 40 can overlap each other by a distance equal to the sum of the depths p of the two inverted portions 22 (see Figure 3C).

The fact that the peak lengths LC are different from the inverted portion lengths LPI, and especially the fact that the lengths LPI are less than the lengths LC, results in many points of contact C1.

The fact that the corresponding rows R of the half-strips S1, S2 are offset from the mid-line M-M by different distances results in an offset of the inverted portions 22 of the two strips 2, 40 along the direction D_{f}. Thus, the combination of the strips 2, 40 has few points C3.

The packing strip 2 according to the invention results in a large number of points of contact C1 or at least points of semi-contact C2 for a given area, which gives the packing module PM2 good stability. Consequently, the module PM2 has a low head loss and exhibits good heat and/or mass exchange performance.

A packing module PM2 according to the invention is manufactured in the following manner.

Firstly, a continuous strip is manufactured. This continuous strip includes the corrugations 8 and the inverted portions 22. The continuous strip is manufactured for example from a flat metal sheet by cutting and bending.

Next, excessive and adjacent strip sections are cut to the desired length L1 and L2, thus forming adjacent packing strips 2, 40 of the module PM2.

Each second strip is then turned through 180°, in particular about the axis M-M, and the strips 2, 40 are applied against each other.

During the manufacture of the packing module from a packing strip according to the invention, it is unnecessary to cut, between two sections of continuous strip, a ribbon of predetermined length, measured along the edges 4, 6, so as to adjust the relative position of the inverted portions 22 of two adjacent strips 2 for the purpose of avoiding an overlap. This advantage is obtained thanks to the aforementioned geometrical characteristics of the strip according to the invention, such as the difference between the inverted portion LPI and the peak length LC.

In other words, the number of points of contact C1 or points of semi-contact C2 between two adjacent strips is to a large extent independent of the relative position of the two strips 2, 40 and of the inverted portions 22 in the direction of the edges 4, 6.

The subject of the invention is also a cryogenic distillation installation, in particular an air distillation installation, comprising strips as described. The installation may comprise one or more distillation columns.

## Claims

1. Distillation installation, especially an air distillation installation, comprising at least one cross-corrugated packing module provided with at least two strips made of sheet material for a cross-corrugated mass/heat exchange packing module, of the type comprising corrugations (8) that form alternately first main peaks (10, 12) directed along a first direction and second main peaks (12, 10) directed along the opposite direction, the corrugations (8) defining channels (14), each channel lying between two first (10, 12) or second (12, 10) adjacent main peaks, the channels (14) having a general orientation (D_{c}) that is inclined to a general flow direction (D_{f}) of a liquid through the module, the strip (2) furthermore comprising two strip edges (4, 6) that lie approximately perpendicular to the general flow direction (D_{f}) and at least first and second adjacent rows (R) of inverted portions (22), these rows (R) lying approximately parallel to the strip edges (4, 6) and respectively comprising first and second inverted portions (22) that lie in the cross section of a channel (14), the strip defining two lengths measured along the general flow direction (D_{f}), namely:
- a peak length (LC) between the said first and second rows (R), the said length being measured between the peak points adjacent to the inverted portions of the first and second rows; and
- an inverted portion length (LPI) measured between the two points of a first or a second inverted portion (22), the said points being adjacent to the associated main peak (10, 12);
the inverted portion length (LPI) being different from the peak length (LC).

2. Installation according to Claim 1, **characterized**
**in that** the ratio of the two lengths (LC, LPI) between them is greater than 1.2.

3. Installation according to Claim 1 or 2, **characterized in that** the inverted portion length (LPI) is less than the peak length (LC):

4. Installation according to one of Claims 1 to 3, **characterized in that** it defines a peak period (PC), measured between two first (10, 12) or two second (12, 10) adjacent main peaks and along the general flow direction (D_{f}), and **in that** the sum of the inverted portion length (LPI) and the peak length (LC) is different from the peak period (PC).

5. Installation according to Claim 4, **characterized in that** the sum of the inverted portion length (LPI) and the peak length (LC) is less than 0.66 times the peak period (PC).

6. Installation according to any one of Claims 1 to 5, **characterized in that** each channel (14) comprises a main top peak formed by a second (12, 10) or a first (10, 12) main peak, **in that** each inverted portion (22) comprises a first intermediate peak (26), oriented in the opposite direction to the top main peak, and at least one second intermediate peak (28, 30) oriented in the direction of the top main peak.

7. Installation according to any one of Claims 1 to 6, **characterized in that** it comprises a mid-line (M-M) lying parallel to the strip edges (4, 6) and at the same distance (m) from them, and **in that**, for at least one row (R) of inverted portions (22) that is located on one side of the mid-line (M-M), the distance (D1, D2) between this row (R) of inverted portions and the mid-line (M-M) is different from the distance (D2, D1) between the mid-line (M-M) and each row (22) of inverted portions that is located on the other side of the mid-line.

8. Installation according to any one of the preceding claims, **characterized in that** the inverted portions (22) and the corrugations (8) define openings (34) provided with opening edges (32), and **in that** the opening edges (32) lie at any point approximately along the natural liquid flow line.

9. Installation according to one of the preceding claims, in which the cross-corrugated packing module for a mass/heat exchange column comprises a stack of strips (2) with their corrugation orientations inverted from one strip to the next, at least two strips (2) being applied against each other, and one of the strips being turned through 180° relative to the other about a mid-line (M-M) lying at mid-distance between the strip edges (4, 6).

## Patentansprüche

1. Destillationsanlage, insbesondere Luftdestillationsanlage, die mindestens ein kreuzgewelltes Packungsmodul aufweist, das mit mindestens zwei aus Folienmaterial hergestellten Streifen für ein kreuzgewelltes Stoff-/Wärmeaustausch-Packungsmodul versehen ist, des Typs, der Wellungen (8) aufweist, welche abwechselnd erste Hauptberge (10, 12), die entlang einer ersten Richtung ausgerichtet sind, und zweite Hauptberge (12, 10), die entlang der entgegengesetzten Richtung ausgerichtet sind, bilden, wobei die Wellungen (8) Kanäle (14) definieren, wobei jeder Kanal zwischen zwei ersten (10, 12) oder zweiten (12, 10) benachbarten Hauptbergen liegt, wobei die Kanäle (14) eine allgemeine Ausrichtung (D_{c}) haben, welche zu einer allgemeinen Strömungsrichtung (D_{f}) einer Flüssigkeit durch das Modul geneigt ist, wobei der Streifen (2) ferner zwei Streifenränder (4, 6) aufweist, welche annähernd senkrecht zu der allgemeinen Strömungsrichtung (D_{f}) verlaufen, und mindestens erste und zweite benachbarte Reihen (R) von Umstülpungen (22), wobei diese Reihen (R) annähernd parallel zu den Streifenrändern (4, 6) verlaufen und erste bzw. zweite Umstülpungen (22) aufweisen, welche im Querschnitt eines Kanals (14) liegen, wobei der Streifen zwei entlang der allgemeinen Strömungsrichtung (D_{f}) gemessene Längen definiert, nämlich:
- eine Berg-Länge (LC) zwischen den ersten und zweiten Reihen (R), wobei diese Länge zwischen den Berg-Punkten gemessen wird, die den Umstülpungen der ersten und zweiten Reihen benachbart sind; und
- eine Umstülpungs-Länge (LPI), die zwischen den zwei Punkten einer ersten oder einer zweiten Umstülpung (22) gemessen wird, wobei diese Punkte dem zugehörigen Hauptberg (10, 12) benachbart sind;
- wobei die Umstülpungs-Länge (LPI) von der Berg-Länge (LC) verschieden ist.

2. Anlage nach Anspruch 1, **dadurch gekennzeichnet, dass** das Verhältnis zwischen den zwei Längen (LC, LPI) größer als 1,2 ist.

3. Anlage nach Anspruch 1 oder 2, **dadurch gekennzeichnet, dass** die Umstülpungs-Länge (LPI) kleiner als die Berg-Länge (LC) ist.

4. Anlage nach einem der Ansprüche 1 bis 3, **dadurch gekennzeichnet, dass** sie eine Berg-Periode (PC) definiert, die zwischen zwei ersten (10, 12) oder zwei zweiten (12, 10) benachbarten Hauptbergen und entlang der allgemeinen Strömungsrichtung (D_{f}) gemessen wird, und **dadurch**, dass die Summe der Umstülpungs-Länge (LPI) und der Berg-Länge (LC) von der Berg-Periode (PC) verschieden ist.

5. Anlage nach Anspruch 4, **dadurch gekennzeichnet, dass** die Summe der Umstülpungs-Länge (LPI) und der Berg-Länge (LC) kleiner als 0,66 mal die Berg-Periode (PC) ist.

6. Anlage nach einem der Ansprüche 1 bis 5, **dadurch gekennzeichnet, dass** jeder Kanal (14) einen Spitzen-Hauptberg aufweist, der von einem zweiten (12, 10) oder einem ersten (10, 12) Hauptberg gebildet wird, und **dadurch**, dass jede Umstülpung (22) einen ersten Zwischenberg (26), der in der zu dem Spitzen-Hauptberg entgegengesetzten Richtung ausgerichtet ist, und mindestens einen zweiten Zwischenberg (28, 30), der in der Richtung des Spitzen-Hauptberges ausgerichtet ist, aufweist.

7. Anlage nach einem der Ansprüche 1 bis 6, **dadurch gekennzeichnet, dass** sie eine Mittellinie (M-M) aufweist, die parallel zu den Streifenrändern (4, 6) und in demselben Abstand (m) von ihnen verläuft, und **dadurch**, dass für mindestens eine Reihe (R) von Umstülpungen (22), welche sich auf einer Seite der Mittellinie (M-M) befindet, der Abstand (D1, D2) zwischen dieser Reihe (R) von Umstülpungen und der Mittellinie (M-M) von dem Abstand (D2, D1) zwischen der Mittellinie (M-M) und jeder Reihe (22) von Umstülpungen, welche sich auf der anderen Seite der Mittellinie befindet, verschieden ist.

8. Anlage nach einem der vorhergehenden Ansprüche, **dadurch gekennzeichnet, dass** die Umstülpungen (22) und die Wellungen (8) Öffnungen (34) definieren, die mit Öffnungsrändern (32) versehen sind, und **dadurch**, dass die Öffnungsränder (32) in jedem Punkt annähernd entlang der natürlichen Strömungslinie der Flüssigkeit verlaufen.

9. Anlage nach einem der vorhergehenden Ansprüche, wobei das kreuzgewellte Packungsmodul für eine Stoff-/Wärmeaustausch-Kolonne einen Stapel von Streifen (2) aufweist, bei denen die Ausrichtungen der Wellungen von einem Streifen zum nächsten jeweils umgekehrt sind, wobei mindestens zwei Streifen (2) aneinandergelegt sind und einer der Streifen relativ zu dem anderen um 180° um eine Mittellinie (M-M) gedreht ist, die in der Mitte zwischen den Streifenrändern (4, 6) verläuft.

## Revendications

1. Installation de distillation, en particulier installation de distillation d'air, comprenant au moins un module de garnissage à ondulations croisées pourvu d'au moins deux bandes en tôle pour une colonne de garnissage d'échange de chaleur/masse à ondulations croisées, du type comprenant des ondulations (8) qui forment en alternance des premiers pics principaux (10, 12) orientés le long d'une première direction et des deuxièmes pics principaux (12, 10) orientés le long de la direction opposée, les ondulations (8) définissant des canaux (14), chaque canal se situant entre deux premiers (10, 12) ou deuxièmes (12,10) pics principaux adjacents, les canaux (14) ayant une orientation générale (D_{c}) qui est inclinée dans une direction d'écoulement générale (D_{f}) d'un liquide à travers le module, la bande (2) comprenant en outre deux bords de bande (4, 6) qui sont disposés approximativement perpendiculairement à la direction d'écoulement générale (D_{f}) et au moins des première et deuxième rangées adjacentes (R) de portions inversées (22), ces rangées (R) étant disposées approximativement parallèlement aux bords de bande (4, 6) et comprenant respectivement des premières et deuxièmes portions inversées (22) qui sont disposées dans la section transversale d'un canal (14), la bande définissant deux longueurs mesurées le long de la direction d'écoulement générale (D_{f}), à savoir :
- une longueur de pic (LC) entre lesdites première et deuxième rangées (R), ladite longueur étant mesurée entre les points des pics adjacents aux portions inversées des première et deuxième rangées ; et
- une longueur de portion inversée (LPI) mesurée entre les deux points d'une première ou d'une deuxième portion inversée (22), lesdits points étant adjacents au pic principal associé (10, 12) ;
la longueur de portion inversée (LPI) étant différente de la longueur de pic (LC).

2. Installation selon la revendication 1, **caractérisée en ce que** le rapport des deux longueurs (LC, LPI) entre elles est supérieur à 1,2.

3. Installation selon la revendication 1 ou 2, **caractérisée en ce que** la longueur de portion inversée (LPI) est inférieure à la longueur du pic (LC).

4. Installation selon l'une quelconque des revendications 1 à 3, **caractérisée en ce qu'**elle définit une période de pic (PC), mesurée entre deux premiers (10, 12) ou deuxièmes (12, 10) pics principaux adjacents et le long de la direction d'écoulement générale (D_{f}), et **en ce que** la somme de la longueur de portion inversée (LPI) et de la longueur de pic (LC) est différente de la période de pic (PC).

5. Installation selon la revendication 4, **caractérisée en ce que** la somme de la longueur de portion inversée (LPI) et de la longueur de pic (LC) est inférieure à 0,66 fois la période de pic (PC).

6. Installation selon l'une quelconque des revendications 1 à 5, **caractérisée en ce que** chaque canal (14) comprend un pic supérieur principal formé par un deuxième (12, 10) ou un premier (10, 12) pic principal, **en ce que** chaque portion inversée (22) comprend un premier pic intermédiaire (26), orienté dans la direction opposée au pic supérieur principal, et au moins un deuxième pic intermédiaire (28, 30) orienté dans la direction du pic supérieur principal.

7. Installation selon l'une quelconque des revendications 1 à 6, **caractérisée en ce qu'**elle comprend un axe médian (M-M) disposé parallèlement aux bords de bande (4, 6) et à la même distance (m) de ceux-ci, et **en ce que**, pour au moins une rangée (R) de portions inversées (22) située d'un côté de l'axe médian (M-M), la distance (D1, D2) entre cette rangée (R) de portions inversées et l'axe médian (M-M) est différente de la distance (D2, D1) entre l'axe médian (M-M) et chaque rangée (22) de portions inversées qui est disposée de l'autre côté de l'axe médian.

8. Installation selon l'une quelconque des revendications précédentes**, caractérisée en ce que** les portions inversées (22) et les ondulations (8) définissent des ouvertures (34) pourvues de bords d'ouverture (32), et **en ce que** les bords d'ouverture (32) sont disposés en un point quelconque approximativement le long de la ligne d'écoulement naturelle du liquide.

9. Installation selon l'une quelconque des revendications précédentes, dans laquelle le module de garnissage à ondulations croisées pour une colonne d'échange de chaleur/masse comprend un empilement de bandes (2) avec leurs orientations d'ondulations inversées d'une bande à l'autre, au moins deux bandes (2) étant appliquées l'une contre l'autre, et l'une des bandes étant tournée de 180° par rapport à l'autre autour d'un axe médian (M-M) situé à mi-distance entre les bords de bande (4, 6).
